# EUROPEAN PATENT APPLICATION

(11) **EP 2 461 050 A1**
(43) Date of publication of application: **06.06.2012**
(21) Application number: 10804518.8
(22) Date of filing: 29.07.2010
(51) Int. Cl.: F16B 19/10

(54) **PUSH RIVET**

(30) Priority: 31.07.2009 JP 2009179222
(71) Applicant: Nifco INC., Yokohama-shi, Kanagawa 244-8522 (JP)
(72) Inventor: HARADA Kiyotsugu, Yokohama-shi Kanagawa 244-8522 (JP); AOSHIMA Tomoaki, Yokohama-shi Kanagawa 244-8522 (JP)
(74) Representative: Gassner, Wolfgang
(86) International application number: PCT/JP2010/062843
(87) International publication number: WO 2011/013772

(57) **Abstract**

A push rivet used to secure members to be mounted includes a rivet body and a pin. Rivet body includes at least a flange portion provided with an insertion hole; a pair of first divided leg portions projecting from the flange portion to an end side; at least a pair of second divided leg portions projecting from the flange portion to an end side to form slits between the pair of second divided leg portions and the pair of first divided leg portions; and bulging portions respectively projecting from end parts of the first divided leg portions and the second divided leg portions to an inner side, the bulging portions having tapered surfaces inclined to project inwardly to the end side. The pin includes at least a head portion to fit into the flange portion; a shaft portion formed to project from the head portion to the end side and having a cavity therein; corner portions provided on side surfaces of the shaft portion to slidably fit into the slits; and dented grooves to engage the bulging portions of the second divided leg portions to diametrically enlarge the second divided leg portions.

## Description

### TECHNICAL FIELD

The present invention relates to a push rivet having a structure where foreign materials, such as gravel, can barely enter inside, and the foreign materials, if unavoidably entered inside, can be easily discharged out of the structure. The present invention relates to a push rivet in which a rivet body is inserted through insertion holes formed in two members to be mounted, and a pin is pressed into a hole formed in the rivet body to diametrically enlarge leg portions of the rivet body, so that the members can be successfully mounted.

### BACKGROUND ART

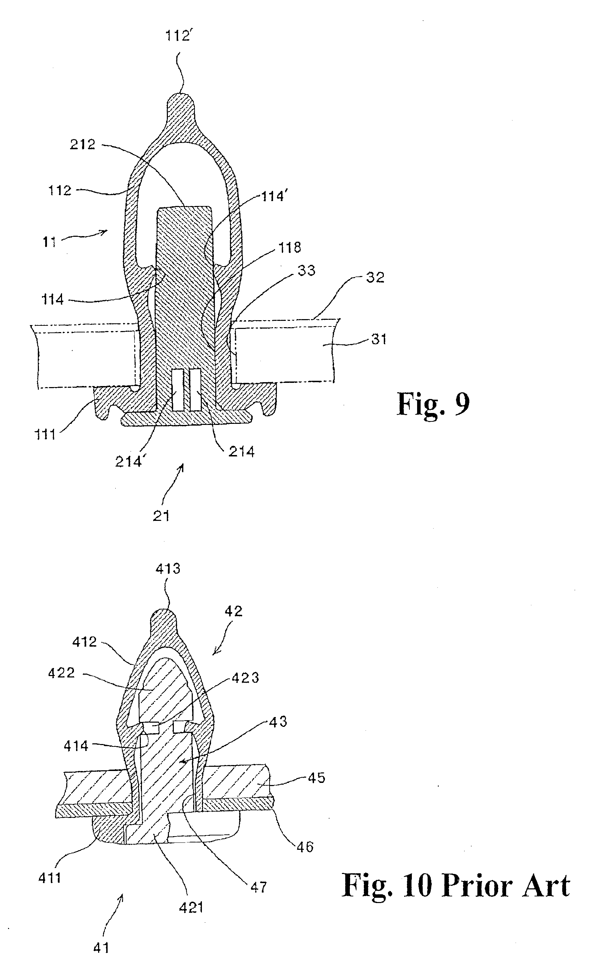

Fig. 10 is a view illustrating a state where a conventional push rivet is fitted into members to be mounted. An example of the conventional push rivets is disclosed in Japanese Unexamined Patent Publication No. H5-302609. Referring to Fig. 10, a push rivet 41 includes at least a female member 42 and a male member 43. The female member 42 has coupled leg portions 412 to be inserted through mounting holes 47 formed in panels 45 and 46, and engaging projections 414 each having a tapered surface on the inner side of the coupled leg portions 412. The male member 43 has a shaft portion 422 to be pressed into a pin entry hole 47 formed between the coupled leg portions 412, and dented portions 423 formed in the shaft portion 422 to be engaged with the engaging projections 414 provided on the inner side of the coupled leg portions 412.

In the push rivet 41, the coupled leg portions 412 are inserted through the mounting holes 47 formed in the panels 45 and 46, and the shaft portion 43 of the pin is then pressed into the coupled leg portions 412. When the coupled leg portions 412 are pushed open outward by the engaging projections 414 having the tapered surface, the coupled leg portions 412 are joined with the panels 45 and 46.

### PRIOR ART DOCUMENT

### PATENT DOCUMENT

Patent Document 1: Japanese Unexamined Patent Publication No. H5-302609

### SUMMARY OF THE INVENTION

### PROBLEMS TO BE SOLVED BY THE INVENTION

As described above, the push rivet 41 illustrated in Fig. 10 can be fitted into the panels 45 and 46 when the male member 43 is pressed into the female member 42 inserted through the panels 45 and 46. However, the push rivet 41 has a problem in that if foreign materials, such as gravel, are attached thereto, the male member 43 cannot be easily detached from the female member 42 whenever intended to do so. Moreover, when the push rivet 41 is used in a section, such as a fender, a tire house, or a bumper, the push rivet 41 may be fitted upward from a lower side. The push rivet 41 used in such sections is often exposed to weather. Then, gravel, mud, and water content thereby attached to the push rivet 41 become pasty and then dry, consequently adhering to the push rivet or invading through gaps of the push rivet. If it comes to such a state, it is no longer possible to detach the male member of the push rivet 41 from the female member thereof.

To solve the above problems, an object of the present invention is to provide a push rivet structured in a shape that allows foreign materials attached, such as gravel, to easily fall off therefrom when a male member is pulled out from a female member. Further, the object of the present invention is to provide a push rivet in which foreign materials that have invaded into a male member, such as gravel, can be easily removed, and the foreign materials can easily fall off therefrom when the male member is pulled out from coupled leg portions of the female member.

### MEANS FOR SOLVING THE PROBLEMS

A push rivet according to a first aspect of the present invention is formed in a shape to easily discharge therefrom foreign materials that have entered inside when members to be mounted are secured. The push rivet includes a rivet body at least having a flange portion provided with an insertion hole, a pair of first divided leg portions projecting from the flange portion to an end side, at least a pair of second divided leg portions projecting from the flange portion to the end side to form slits between the pair of second divided leg portions and the pair of first divided leg portions, and bulging portions respectively projecting inward from end parts of the first divided leg portions and the second divided leg portions, the bulging portions each having a tapered surface inclined to project inwardly to the end side; and a pin at least including a head portion to fit into the flange portion, a shaft portion formed to project from the head portion to the end side and having cavities therein, corner portions provided on a side surface of the shaft portion to slidably fit into the slits, and dented grooves engaged with the bulging portions of the second divided leg portions to diametrically enlarge the second divided leg portions.

In the above push rivet, the first divided leg portions are preferably disposed to face each other and extending to engage integrally with each other.

A push rivet according to a second aspect of the present invention is formed in a shape to easily discharge therefrom foreign materials that have entered inside when members to be mounted are secured. The push rivet includes a rivet body at least including a flange portion provided with an insertion hole, a pair of first divided leg portions projecting from the flange portion to an end side, at least a pair of second divided leg portions projecting from the flange portion to the end side to form slits between the pair of second divided leg portions and the pair of first divided leg portions, the pair of second divided leg portions further being increasingly widened toward the end side, and bulging portions respectively projecting inward from end parts of the first divided leg portions and the second divided leg portions, the bulging portions each having a tapered surface inclined to project inwardly to the end side; and a pin at least having a head portion to be fitted into the flange portion, a shaft portion formed to project from the head portion to the end side and having cavities therein, corner portions provided on a side surface of the shaft portion to slidably fit into the slits, and dented grooves engaged with the bulging portions of the second divided leg portions to diametrically enlarge the second divided leg portions.

In the above push rivet, the first divided leg portions are preferably disposed to face each other and extending to engage integrally with each other.

### EFFECTS OF THE INVENTION

As described above, in the push rivet according to the present invention, the bulging portions respectively having the tapered surfaces inclined to project inwardly to the end side are provided in the divided leg portions and the coupled leg portions. When the bulging portions are engaged with the dented grooves of the pin to diametrically enlarge the divided leg portions, the push rivet can be easily and securely fitted into mounting holes of the members to be mounted.

Further, according to the push rivet of the present invention, the shaft portion has cavities therein which laterally penetrate therethrough in the lateral direction. Therefore, foreign materials, such as gravel, may enter the cavities but barely enter further into the rivet body. The push rivet is further structurally advantageous in that the shaft portion can be easily pulled out to be detached, and the foreign materials can be easily discharged from the cavities.

Further, in the push rivet according to the present invention, the shapes of the divided leg portions are increasingly widened toward the end side. Therefore, when the pin is pulled out from the rivet body, an interval between the rivet body and the pin gradually increases. Accordingly, foreign materials, such as gravel, easily fall off and the pin can be easily pulled out.

According to the present invention, the coupled leg portions are disposed to face each other and extending to engage integrally in an upper end part thereof. Accordingly, an elastic joint strength to join the rivet body and the pin of the push rivet with each other can be easily set to any desirable degree of firmness.

### BRIEF DESCRIPTION OF THE DRAWINGS

Fig. 1 is a view showing a rivet body 11 constituting a push rivet according to an exemplary embodiment of the present invention when viewed from a direction orthogonal to a longitudinal direction thereof.
Fig. 2 is a view showing the rivet body 11 constituting the push rivet according to the exemplary embodiment when viewed from a direction orthogonal to the longitudinal direction thereof.
Fig. 3 is an overall perspective view of the rivet body 11.
Fig. 4 is a partial perspective view of the rivet body 11.
Fig. 5 is a view showing a pin 21 constituting the push rivet according to the exemplary embodiment when viewed from a direction orthogonal to a longitudinal direction thereof.
Fig. 6 is a view showing the pin 21 constituting the push rivet according to the exemplary embodiment when viewed from a direction orthogonal to the longitudinal direction thereof.
Fig. 7 is a plan view of the pin 21.
Fig. 8 is a perspective view of the pin 21.
Fig. 9 is a cross-sectional view illustrating a state where the pin 21 is pressed into the rivet body 11 fitted into panels 31 and 32.
Fig. 10 is a view illustrating a state where a conventional push rivet is fitted into members to be mounted.

### EMBODIMENT FOR CARRYING OUT THE INVENTION

Hereinafter, the present invention will be described with reference to an embodiment thereof. However, the embodiment described below does not limit the scope of the invention recited in the claims. Further, all of possible combinations of technical features described in the embodiment are not necessarily prerequisites of the solving means provided by the present invention.

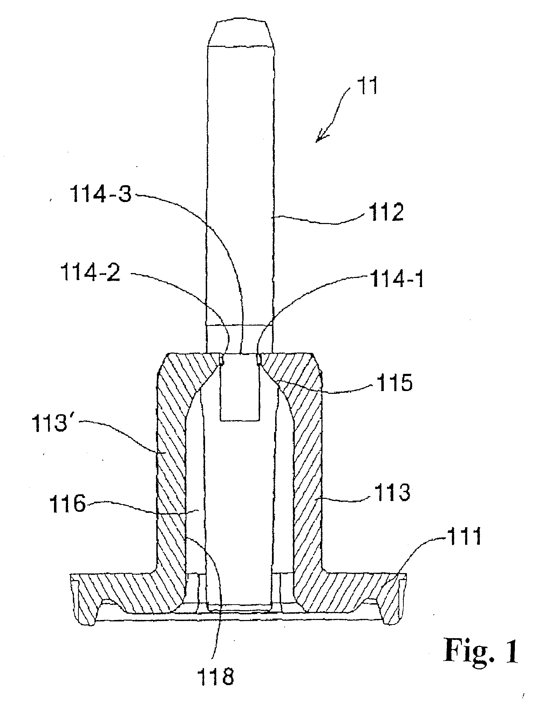

A push rivet according to an exemplary embodiment of the present invention will be described with reference to Figs. 1 to 9. The push rivet according to the present example is a fixture used to mount members to be mounted, such as a fender, a tire house, or a bumper of a vehicle, to a body of the vehicle. In particular, the push rivet is used in sections of these members which are exposed to weather, mud, or dust. As described below, the push rivet according to the present example is structured in a shape that allows foreign materials, such as gravel, which entered inside, if any, to be easily discharged when the push rivet is detached from the members to be mounted.

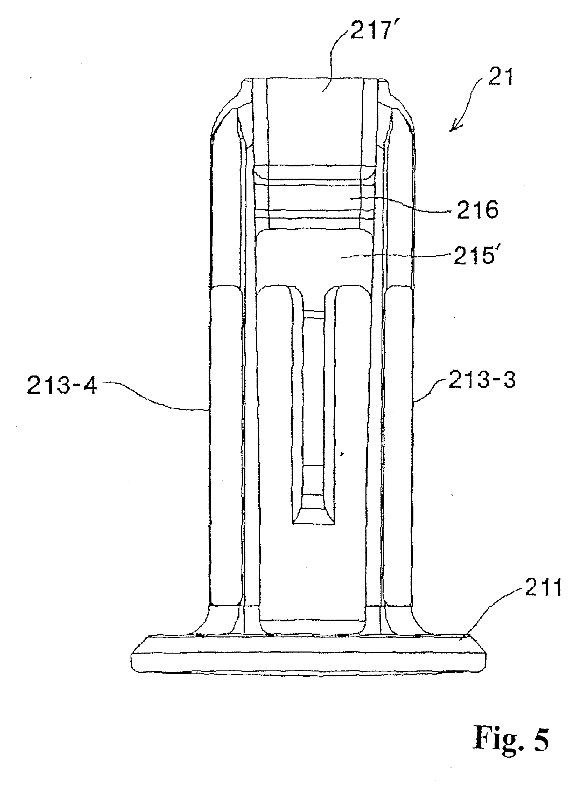

The push rivet according to the present example includes a rivet body 11 (see Figs. 1 to 4), and a pin 21 pressed into the rivet body 11 (see Figs. 5 to 8). The rivet body 11 is inserted into through holes 33 provided as mounting holes for the push rivet in panels 31 and 32 stacked on top of each other which are examples of the members to be mounted, and the pin 21 is then pressed into an insertion hole 118 of the rivet body 11. Then, two panels 31 and 32 are securely fixed to each other (see Fig. 9).

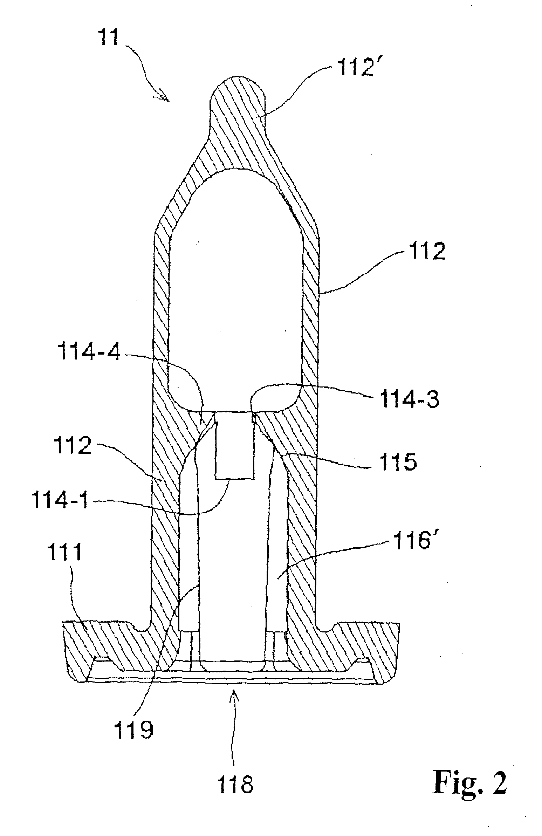

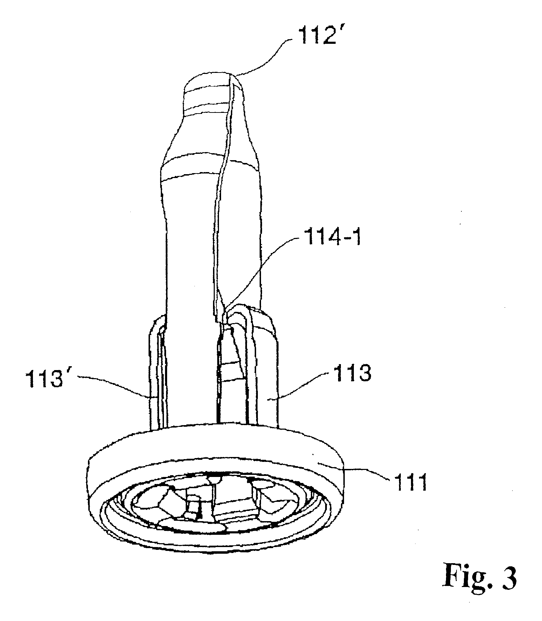

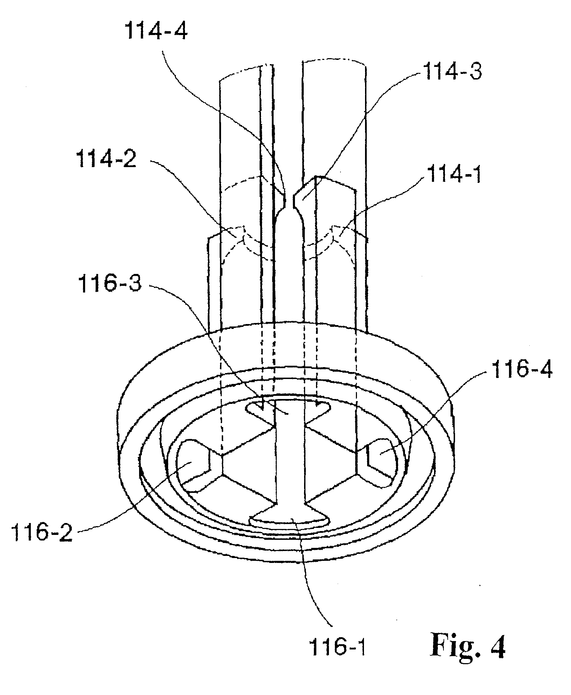

Figs. 1 and 2 are views each showing the rivet body 11 constituting the push rivet according to the exemplary embodiment of the present invention when viewed from a direction orthogonal to a longitudinal direction thereof, where Figs. 1 and 2 are viewed from different directions. Figs. 1 and 2 each show a part of the rivet body 11 in cross section. Fig. 3 is an overall perspective view of the rivet body 11. Fig. 4 is a partial perspective view of the rivet body 11.

As illustrated in Figs. 1 to 4, the rivet body 11 has a flange portion 111, coupled leg portions 112, divided leg portions 113 and 113', and bulging portions 114. As illustrated in Figs. 1 to 4 with reference symbols 114-1, 114-2, 114-3, and 114-4, the rivet body 11 has a plurality of bulging portions 114 formed at substantially equal positions.

The flange portion 111 has an insertion hole 118 formed at its center part for a pin 21 (see Figs. 5 to 8) to be pressed thereinto. As illustrated in Figs. 1 to 4, the coupled leg portions 112 have a structure where a pair of legs extending from the flange portion 111 to an end of the rivet body 11 is coupled with each other at an end part thereof. In the coupled leg portions 112, lengths, widths, thicknesses, and degrees of bulge of the respective legs are decided in view of spring characteristics when engaged with the pin 21. A coupled projection 112' is provided at the end of the rivet body 11 in a longitudinal direction thereof (end of the rivet body on the opposite side of the flange portion 111). More specifically, the coupled projection 112' is provided so as to project from an end part of the coupled leg portions 112 to the end side of the rivet body 11 (on the opposite side of the flange portion 111) along the longitudinal direction of the rivet body 11.

The divided leg portions 113 and 113' extend in a pair from positions in the flange portion 111 different from positions of the coupled leg portions 112 to the end of the rivet body 11. As illustrated in Figs. 1 and 2, slits 116 and 116' are formed between the pair of legs of the coupled leg portions 112 and the divided leg portions 113 and 113'. Although the present example provides only one pair of divided leg portions 113 and 113' between the coupled leg portions 112, a plurality of pairs of divided leg portions may be provided between the coupled leg portions 112. The divided leg portions 113 and 113' are provided such that the bulging portions 114 of the coupled leg portions 112 are located at equal positions in uppermost parts thereof.

The divided leg portions 113 and 113' respectively have bulging portions 114-1 and 114-2 formed in end parts thereof to project inward. The bulging portions 114-1 and 114-2 each has a tapered surface 115 gradually projecting inwardly to the end side of the rivet body 11. The pair of legs of the coupled leg portions 112 respectively has bulging portions 114-3 and 114-4 formed to project inward at positions adjacent to the end parts of the divided leg portions 113 and 113'. These bulging portions 114-3 and 114-4 each has a tapered surface 115 structured similarly to the tapered surfaces of the bulging portions 114-1 and 114-2. The tapered surfaces 115 of the bulging portions 114-3 and 114-4 are tilting surfaces inclined to gradually project inwardly to the end side of the rivet body 11.

When members to be mounted are securely mounted by means of the push rivet, the bulging portions 114-1, 114-2, 114-3, and 114-4 formed in the coupled leg portions 112 and the divided leg portions 113 and 113' are engaged with dented grooves 215 of the pin 21 described later. As a result, the coupled leg portions 112 are pushed open outward.

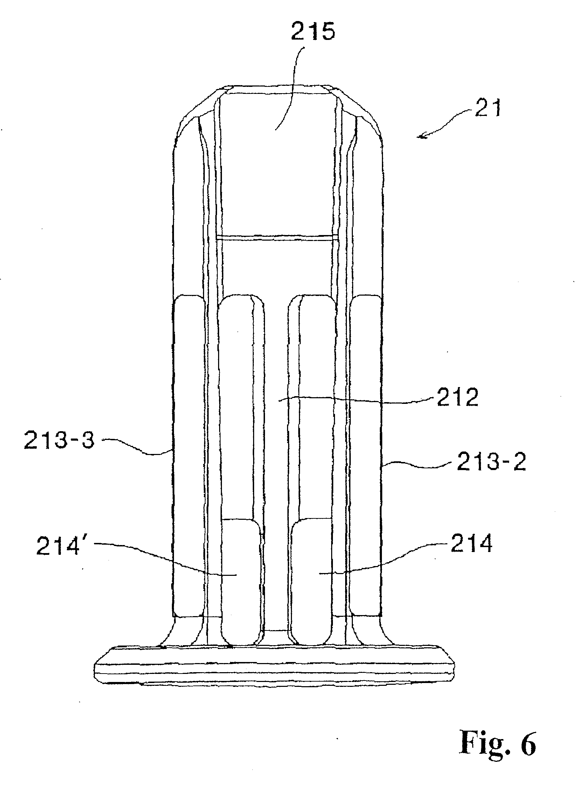

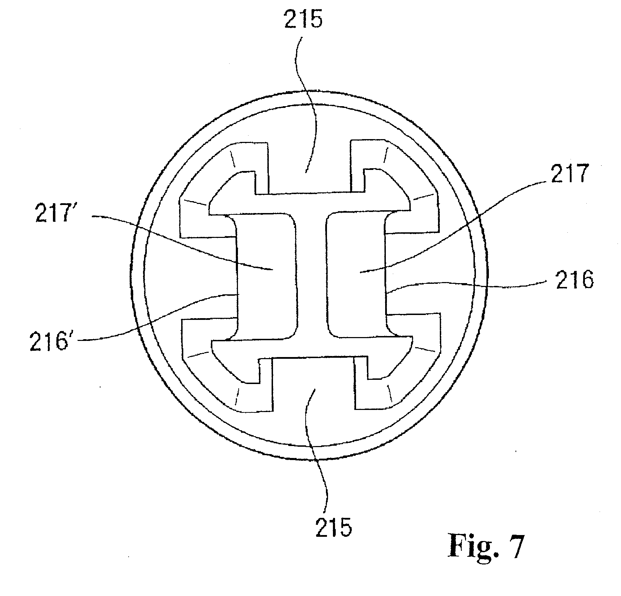

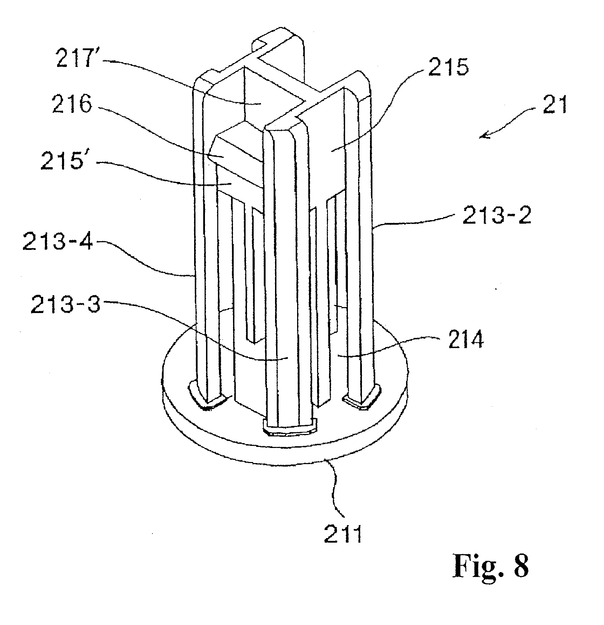

Figs. 5 and 6 are views each showing the pin 21 constituting the push rivet according to the exemplary embodiment of the present invention when viewed from directions orthogonal to a longitudinal direction thereof. Fig. 7 is a plan view of the pin 21. Fig. 8 is a perspective view of the pin 21. As illustrated in Figs. 5 to 8, the pin 21 has a head portion 211 and a shaft portion 212. The head portion 211 has thickness and diameter dimensions suitable for the depth and the diameter of the insertion hole 118 provided in the flange portion 111 of the rivet body 11. When the pin 21 is pressed into the insertion hole 118 of the rivet body 11, the head portion 211 is fitted into the insertion hole 118.

The shaft portion 212 extends from the head portion 211 of the pin 21 to an end of the pin 21. The shaft portion 212 has cavities 214 and 214' penetrating through in the direction orthogonal to the longitudinal direction of the pin 21 at positions closer to the head portion 211. Foreign materials, such as gravel, having entered inside of the cavities 214 and 214' do not advance further into the pin 21. When the pin 21 is detached from the rivet body 11, the foreign materials attached to the vicinities of the cavities 214 and 214' are very likely to fall off, and the foreign materials in the cavities 214 and 214' are easily discharged therefrom.

Looking at the shaft portion 212 in cross section, corner portions 213-1, 213-2, 213-3, and 213-4 are provided near four corners of a substantially square shape, and dented grooves 215 and 215' are provided between the corner portions 213-1, 213-2, 213-3, and 213-4. When the pin 21 is pressed into the insertion hole 118 of the rivet body 11, the corner portions 213-1, 213-2, 213-3, and 213-4 are slidably fitted into the slits 116 of the rivet body 11, and the dented grooves 215 and 215' are provided between the corner portions 213-1, 213-2, 213-3, and 213-4.

When the pin 21 is pressed into the rivet body 11, the shaft portion 212 moves along the slits 116, the coupled leg portions 112, and the divided leg portions 113 and 113' of the rivet body 11. At the same time, the bulging portions 114 of the coupled leg portions 112 and the divided leg portions 113 and 113' move along the dented grooves 215 and 215' of the shaft portion 212. Further, the coupled leg portions 112 of the rivet body 11 are pushed open outward by the shaft portion 212 by means of the bulging portions 114.

The shaft portion 212 has projecting portions 216 formed at positions in the dented grooves 215' closer to the end side of the pin 21. Further, stepped portions 217' dented more inward than the dented grooves 215' are formed at positions in the dented grooves 215' even closer to the end side of the pin 21. When the pin 21 is pressed into the rivet body 11, the bulging portions 114 provided in the coupled leg portions 112 move toward the end side of the rivet body 11 along the dented grooves 215' of the shaft portion 212. The bulging portions 114 then pass the stepped portions 217', and are fitted into the stepped portions 217'. As a result, the pin 21 is securely latched so as not to fall off from the rivet body 11. In order to pull out the pin 21 from the rivet body 11, an external force strong enough for the bulging portions 114 provided in the coupled leg portions 112 to move out of the stepped portions 217' toward the dented grooves 215' is simply applied thereto.

The structures and the shapes of the rivet body 11 and the pin 21 are decided depending on an environment where the push rivet is used or mostly focusing on easy removal of foreign materials when the pin 21 is detached from the rivet body 11.

Fig. 9 is a view illustrating a state where the pin 21 is pressed into the rivet body 11 fitted into panels 31 and 32. As illustrated in Fig. 9, when the push rivet is used for securing the panels 31 and 32, the rivet body 11 is inserted into the through holes 33 provided in the panels 31 and 32, and the pin 21 is then pressed into the rivet body 11. When the pin 21 is pressed into the rivet body 11, the coupled leg portions 112 are pushed open outward, so that the panels 31 and 32 can be securely fitted to each other.

In the push rivet according to the present exemplary embodiment, as illustrated in Fig. 2, tapered surfaces 119 increasingly widened toward the end side of the rivet body 11 are formed on inner surfaces of the divided leg portions 113 and 113' of the rivet body 11. Because of the structure where intervals between the divided leg portions 113 and 113' are gradually narrowed toward the root side of the rivet body 11, intervals between the corner portions 213-1, 213-2, 213-3, and 213-4 of the pin 21 and the slits 116 and 116' are gradually increased when the pin 21 is pulled toward the root side of the rivet body 11. As a result, foreign materials, such as gravel, can easily fall off and the pin 21 can be easily pulled out. When the coupled leg portions 112 are formed in the same shape as the divided leg portions 113 and 113', foreign materials, such as gravel, can more easily fall off.

Alternatively, the coupled leg portions 112 of the rivet body 11 may not necessarily include a pair of legs coupled with each other in the end part of the rivet body 11 as in the present example. In other words, the rivet body 11 may be provided with two pairs of divided leg portions, in which case the respective leg portions may have different lengths. The respective leg portions in the divided leg portions are suitably formed in any desirable shapes depending on a pressing force applied when the rivet body 11 and the pin 21 are joined with each other.

The embodiment of the present invention has been described above. However, the present invention is not necessarily limited to the embodiment described above. The present invention can be subjected to various design changes within a range not deviating from the contents recited in the scope of claims. For example, the shapes and materials of the rivet body and the pin constituting the push rivet according to the present invention can be arbitrarily changed.

The present application is based on the Japanese Patent Application filed on July 31, 2009 (Japanese Patent Application No. 2009-179222), and the contents thereof are hereby incorporated by reference.

### DESCRIPTION OF REFERENCE SYMBOLS

- 11 .....: rivet body
- 111 ....: flange
- 112 ....: coupled leg portion
- 112' ...: coupled projection
- 113 ....: divided leg portion
- 114 ....: bulging portion
- 115 ....: tapered surface
- 116 ....: slit
- 118 ....: insertion hole
- 119 ....: taper
- 21 .....: pin
- 211 ....: head portion
- 212 ....: shaft portion
- 213 ....: slit-fitting projection
- 214 ....: cavity
- 215 ....: dented groove
- 216 ....: projecting portion
- 217 ....: stepped portion

## Claims

1. A push rivet for mounting secure members, comprising:
a rivet body at least including:
a flange portion having an insertion hole;
a pair of first divided leg portions projecting from the flange portion to an end side thereof;
at least a pair of second divided leg portions projecting from the flange portion to an end side thereof to form slits between the pair of second divided leg portions and the pair of first divided leg portions; and
bulging portions respectively projecting from end parts of the first divided leg portions and the second divided leg portions to an inner side, and having tapered surfaces inclined to project inwardly to the end side; and
a pin at least including:
a head portion to fit into the flange portion;
a shaft portion projecting from the head portion to an end side thereof and having a cavity therein;
corner portions provided on side surfaces of the shaft portion to slidably fit into the slits; and
dented grooves to engage the bulging portions of the second divided leg portions to diametrically enlarge the second divided leg portions.

2. A push rivet according to claim 1, wherein the first divided leg portions are disposed to face each other, and project to engage integrally with each other.

3. A push rivet formed in a shape adapted to easily discharge foreign materials that enter inside when securing members to be mounted, comprising:
a rivet body at least including:
a flange portion having an insertion hole;
a pair of first divided leg portions projecting from the flange portion to an end side thereof;
at least a pair of second divided leg portions projecting from the flange portion to an end side thereof to form slits between the pair of second divided leg portions and the pair of first divided leg portions, the pair of second divided leg portions being formed to gradually widen toward the end side; and
bulging portions respectively projecting from end parts of the first divided leg portions and the second divided leg portions to an inner side, and having a tapered surface inclined to project inwardly to the end side; and
a pin at least including:
a head portion to fit into the flange portion;
a shaft portion projecting from the head portion to an end side, and having a cavity therein;
corner portions provided on side surfaces of the shaft portion to slidably fit into the slits; and
dented grooves to engage the bulging portions of the second divided leg portions to diametrically enlarge the second divided leg portions.

4. A push rivet according to claim 3, wherein the first divided leg portions are disposed to face each other and project to engage integrally with each other.
